(19) **Europäisches Patentamt**

**European Patent Office**

**Office européen des brevets**

(11) **EP 0 786 389 B1**

(12) **EUROPÄISCHE PATENTSCHRIFT**

(45) Veröffentlichungstag und Bekanntmachung des Hinweises auf die Patenterteilung:
**12.06.2002   Patentblatt 2002/24**

(51) Int Cl.⁷: **B60T 8/32**, B60T 8/50, B60T 8/00

(21) Anmeldenummer: **96119335.6**

(22) Anmeldetag: **03.12.1996**

(54) **Verfahren zum Bremsdruck-Wiederaufbau in einem Kraftfahrzeug mit Anti-Blockier-System**

Procedure for rebuilding the pressure in a vehicle with an anti-lock system

Procédé pour la remise sous pression pour un véhicule équipé d'un système d'anti-blocage

(84) Benannte Vertragsstaaten:
**DE FR IT SE**

(30) Priorität: **23.01.1996  DE 19602220**
             **03.07.1996  DE 19626707**

(43) Veröffentlichungstag der Anmeldung:
**30.07.1997   Patentblatt 1997/31**

(73) Patentinhaber: **WABCO GmbH & Co. OHG**
**30453 Hannover (DE)**

(72) Erfinder:
• **Friederichs, Otto**
  **30827 Garbsen (DE)**
• **Rode, Konrad**
  **30926 Seelze (DE)**
• **Köster, Harald**
  **30451 Hannover (DE)**
• **Rosendahl, Hartmut**
  **30167 Hannover (DE)**

(74) Vertreter: **Schrödter, Manfred, Dipl.-Ing.**
**WABCO GmbH & Co. OHG**
**Postfach 91 12 62**
**30432 Hannover (DE)**

(56) Entgegenhaltungen:
**EP-A- 0 422 515          EP-A- 0 572 808**
**US-A- 5 382 086**

**Beschreibung**

Die Erfindung bezieht sich auf ein Verfahren zum Bremsdruck-Wiederaufbau in einem Kraftfahrzeug mit Anti-Blockier-System gemäß dem Oberbegriff des Patentanspruchs 1,der aus dem Dokument EP-A-0 572 808 bekannt geworden ist.

Anti-Blockier-Systeme in Kraftfahrzeugen arbeiten bekanntlich derart, daß die Drehzahlen der Räder mittels Drehzahlsensoren abgefühlt werden, und bei erkannter Blockierneigung eines Rades dessen Bremsdruck schnell abgesenkt wird. Hierdurch kann das Rad wieder anlaufen. Nach der schnellen Bremsdruckabsenkung erfolgt in der Regel eine Bremsdruckhaltephase. Im Anschluß hieran wird der Bremsdruck wieder erhöht. Dies geschieht gewöhnlich in zwei Phasen. In einer ersten Phase wird der Bremsdruck schnell erhöht, und zwar möglichst bis in die Nähe des vorhergehenden Blockier- bzw. Abregeldruckes (siehe gattungsbildende DE-OS 21 64 094). Diese schnelle Phase dient dazu, die Hysterese der Radbremsen möglichst schnell zu durchlaufen.

Im Anschluß an die schnelle Drucksteigerungsphase folgt in der Regel eine flache Drucksteigungsphase, welche dazu dient, sich dem neuen Blockierdruck langsam anzunähern. Sobald dieser wieder erreicht ist, beginnt ein neuer Druckregelzyklus mit einer schnellen Bremsdruckabsenkung vom Abregeldruck auf den Haltedruck.

Es ist auch bereits bekannt (DE-OS 19 44 610) die Wiederbelüftung nach einer Bremsdruckabsenkung durch die Höhe des letzten Blockierdruckes zu beeinflüssen. Hierzu wird die Druckluft beim Bremsdruck-Wiederanstieg über eine verstellbare Drossel geleitet, welche vom letzten Blokkierdruck einstellbar ist. Hierdurch erfolgt eine Dämpfung des Bremsdruckanstieges, und zwar gering bei hohem Blockierdruck und stark beim niedrigem Blockierdruck.

Die bekannten Steuerungsarten des Bremsdruck-Wiederanstieges haben den Zweck, einmal den Bremsweg dadurch zu verkürzen, daß der Bremsdruck über eine langere Zeit kurz unterhalb des Blockierdrukkes gehalten wird, und zum anderen den Regelkomfort dadurch zu erhöhen, daß Regelzyklen mit möglichst geringen Schwankungen des mittleren Bremsdruckes erreichbar sind.

Der Erfindung liegt die Aufgabe zugrunde, ein noch feinfühligeres, den Straßenverhältnissen noch besser angepaßtes Verhalten in der Bremsdruckwiederaufbau-Phase bei einem Antiblockiersystem (ABS) zu ermöglichen, und dadurch den Regelkomfort weiter zu erhöhen.

Die Erfindung ist anwendbar bei Fahrzeugen mit Anti-Blockier-Systemen, und zwar speziell solchen Systemen, die mit Drucksensoren fur die Bremsdrücke der Räder ausgerüstet sind, und bei denen ein gewünschter Bremsdruck bzw. ein gewünschter Gradient des Bremsdruck-Anstiegs mittels eines Druckreglers und stetig arbeitenden Druckregelventilen einregelbar ist (elektronisches Bremssystem EBS). Sie ist jedoch auch anwendbar bei konventionellen Antiblockier-Systemen ohne Regelung des Bremsdrucks, falls Informationen über die Bremsdrücke zur Verfügung stehen.

Die oben stehende Aufgabe wird durch die im Patentanspruch 1 enthaltene Erfindung gelost. Die Unteransprüche enthalten zweckmäßige Weiterbildungen.

Die Erfindung wird im folgenden anhand einer Zeichnung näher erläutert.

Fig. 1 zeigt als Blockschaltbild eine Bremsanlage in einem Kraftfahrzeug, welche mit einem Anti-Blockier-System (ABS) sowie einem elektronischen Bremssystem (EBS) ausgerustet ist.

Fig. 2 zeigt ein Diagramm des Bremsdruckes ($P_B$) über der Zeit, sowie von Radbeschleunigungs-Signalen ($\pm b$) über der Zeit.

Fig. 3 zeigt ein Ablaufdiagramm zur Druckaufbau-Phase.

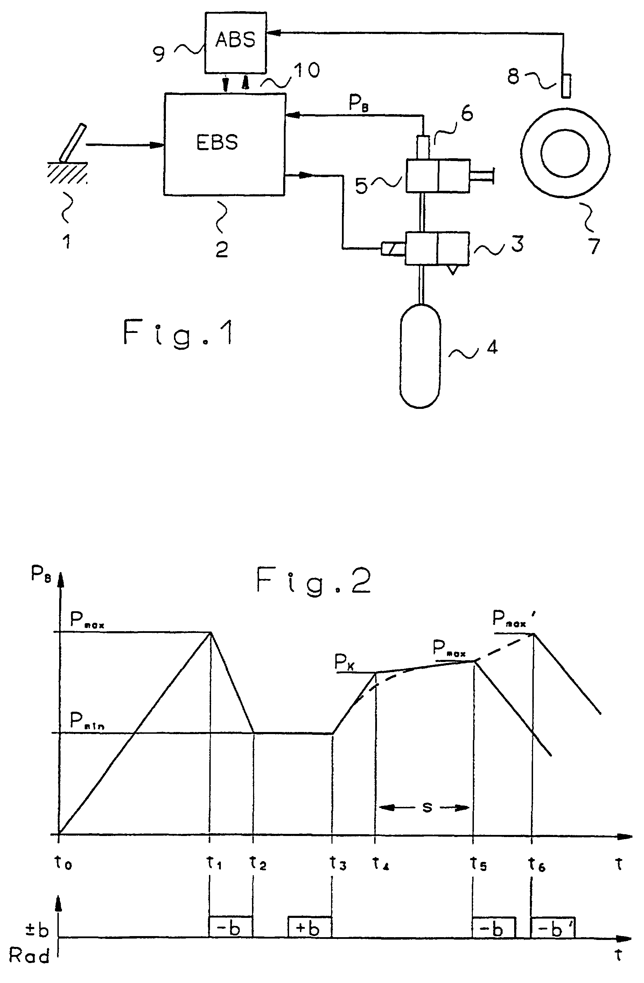

In der Fig. 1 ist ein elektronisches Bremssystem (EBS) schematisch dargestellt. Ein Bremswertgeber (1) mit elektrischem Signalausgang ist an einen Regler (2) (EBS-Elektronik) angeschlossen. Der vom Bremswertgeber (1) stammende, vom Fahrer gewünschte Bremsdruck wird im Regler (2) mit einem Bremsdruck-Istwert verglichen, welcher von einem Drucksensor (6) in einem Bremszylinder (5) abgefühlt wird, und dem Regler (2) als Bremsdruck ($P_B$)zuruckgemeldet wird. Der Drucksensor (6) kann auch in einem Regelventil (3) angeordnet sein. Die jeweilige Regelabweichung wird mittels des vom Regler (2) angesteuerten Regelventils (3) ausgeglichen, welches an einen Druckluftvorratsbehälter (4) angeschlossen ist. Mittels des genannten Regelventils (3) ist es möglich, den Druck im Bremszylinder (5) auf jeden gewünschten Wert bis maximal zum Druck im Druckluftvorratsbehälter (4) einzustellen.

Das dem Bremszylinder (5) zugeordnete Fahrzeugrad (7) ist mit einem Drehzahlsensor (8) versehen. Dieser ist an eine ABS-Elektronik (9) angeschlossen. Die beiden Elektroniken (9 und 2) enthalten Mikrocomputer und konnen über Verbindungsleitungen (10) Daten austauschen.

Falls die ABS-Elektronik (9) während einer Bremsung auf glatter Straße ein drohendes Blockieren des Rades (7) erkennt, gibt sie entsprechende Signale zum Regler (2), wodurch dieser veranlaßt wird, den zu hohen Bremsdruck zunächst abzusenken, und dann im Mittel knapp unter dem Blockierdruck zu halten. Die beiden Elektroniken (2) und (9) konnen auch zusammengefaßt sein.

In der Fig. 2 sind über der Zeit (t) sowohl der Bremsdruck ($P_B$) im Bremszylinder (5) als auch Radbeschleunigungs- und Verzögerungssignale ($\pm b$) aufgetragen.

Zum Zeitpunkt ($t_0$) beginnt eine Bremsung, wobei der Bremsdruck vom Wert (0) bis zum Wert ($P_{max}$) (Abregeldruck) im Zeitpunkt ($t_1$) ansteigt. Zu diesem

Zeitpunkt ($t_1$) erkennt die ABS-Elektronik (9) an einer übermäßigen Verzögerung des Rades (7), daß ein Blokkieren dieses Rades droht. Die Verzögerung des Rades (7) übersteigt dann eine festgelegte Schwelle, wodurch ein internes Verzögerungssignal (-b) erzeugt wird. Der Druck im Bremszylinder (5) wird daraufhin durch den Regler (2) und das Ventil (3) im Zeitraum ($t_1$ bis $t_2$) schnell abgesenkt. Hierdurch verringert sich die Verzögerung des Rades (7) wieder, was am Abfall des Verzögerungssignales (-b) zum Zeitpunkt ($t_2$)erkennbar ist (Ende der Blockierneigung). Sowie dieses Signal abgefallen ist, wird die Drucksenkung beendet. Der Bremsdruck hat nun den Wert $P_{min}$ (Haltedruck).

Im Anschluß an den Zeitpunkt $t_2$ wird eine Druckhalte-Phase ($t_1$ bis $t_3$) eingefügt. Während dieses Druckhaltens erhoht sich die Geschwindigkeit des Rades (7) wieder soweit, daß ein Beschleunigungssignal (+b) ausgegeben wird. Zum Zeitpunkt ($t_3$) fällt dieses Beschleunigungssignal wieder ab, woraus erkennbar ist, daß sich das Rad (7) weitgehend wieder der Fahrzeuggeschwindigkeit angepaßt hat. Ab dem Zeitpunkt $t_3$ kann deshalb der Bremsdruck wieder angehoben werden. Dies geschieht in der Zeitspanne ($t_3$ bis $t_1$) mit steilem Bremsdruckgradienten.

Die Höhe dieses steilen Gradienten sowie die Druckhohe ($P_K$) am Ende des steilen Bremsdruck-Wiederaufbaus (Knickpunkt) ist gemäß der Erfindung eine Funktion von $P_{max}$ und $P_{min}$ des letzten ABS-Bremszyklus. Es kann auch vorteilhaft sein, Mittelwerte von $P_{max}$ bzw. $P_{min}$ der letzten Bremszyklen (ABS-Regelzyklen) zu verwenden.

Hierzu werden in jedem Bremszyklus (ABS-Regelzyklus) die Werte von $P_{max}$ und $P_{min}$ im Bremszylinder (5) vom Drucksensor (6) erfaßt, und in der Elektronik des EBS-Reglers (2) oder des ABS (9) gespeichert. Der Regler (2) oder das ABS (9) berechnet nun mit Hilfe der gespeicherten Druckwerte den optimalen Verlauf (Gradient) des bei $t_3$ beginnenden Bremsdruck-Wiederanstiegs.

Dabei wird der steile Gradient $PG_H$ während der Zeit t3 bis $t_4$ berechnet nach der Formel:

$$PG_H = K_3 + K_4 (P_K - P_{soll})$$

wobei die Konstante $K_3$ zwischen 5 bar/s und 50 bar/s, und der Faktor $K_4$ zwischen 3/s und 20/s liegt, und der Druck $P_{soll}$ ein dem Regler (2) vom ABS (9) vorgegebener Bremsdruck-Sollwert ist.

Die oben enthaltene Druckhöhe $P_K$ (Druck im Knickpunkt) und damit die Lage dieses Punktes wird berechnet nach der Formel:

$$P_K = P_{min} + K_1 (P_{max} - P_{min})$$

wobei der Faktor $K_1$ zwischen 0,3 und 0,9 liegt.

Druch die erfindungsgemäße Berechnung des Verlaufs des steilen Bremsdruck-Wiederanstiegs läßt sich eine besonders komfortable Überwindung der Bremsen-Hysterese erzielen, wobei der Druck $P_K$ ohne Uberschwingen in die Nahe des Abregeldruckes $P_{max}$ geführt werden kann.

Im Anschluß an die beschriebene steile Drukkerhohung erfolgt im Zeitraum $t_4$ bis $t_5$ eine weitere Druckerhöhung mit flachem Gradienten. Hierdurch soll der Bremsdruck langsam wieder bis auf den (neuen) Abregeldruck $P_{max}$ im Zeitpunkt $t_5$ geführt werden. Vorteilhaft wird die Höhe des Gradienten des flachen (niedrigen) Druckanstiegs $PG_N$ im Regler (2) oder ABS (9) berechnet nach der Formel:

$$PG_N = K_5 + K_6 \times P_{max}$$

wobei die Konstante $K_5$ etwa den Wert 1 bis 5 bar/s, und der Faktor $K_6$ etwa den Wert 0,3 bis 0,9/s hat.

Hierdurch wird ein besonders langes Verbleiben des Bremsdruckes bis kurz unter dem Abregeldruck ($P_{max}$) gewährleistet, wodurch der Bremsweg des Fahrzeuges verkurzt wird.

Der flache Bremsdruckanstieg ist beendet im Zeitpunkt $t_5$, wenn durch das Erscheinen des -b-Signals wiederum eine Blockierneigung des Rades festgestellt wird. In diesem Fall beginnt ein neuer Druckregelzyklus mit einem schnellen Abfall des Bremsdruckes.

Sollte jedoch nach einer Sicherheitszeit (s), die ab dem Zeitpunkt $t_4$ anläuft, das -b-Signal noch nicht erschienen sein (bei sich verbessernden Straßenverhaltnissen), wird ab dem Ablauf dieser Zeit (s) mit einem steilem Gradienten (gestrichelt dargestellt) der Bremsdruck wiederum stärker erhöht, bis endgultig der neue Abregeldruck ($P_{max}'$) erreicht ist. Dies wird erkannt durch das Erscheinen des Signals -b' im Zeitpunkt $t_6$. Anschließend beginnt wiederum die steile Bremsdruckabsenkung.

Die oben genannte Sicherheitszeit (s) dient also dazu, den Bremsdruck nach ihrem Ablauf schnell an den neuen Abregeldruck heranzuführen, falls sich zwischenzeitlich der Reibwert der Straße erhöht haben sollte.

Vorteilhaft ist es auch, zur Bestimmung des flachen Gradienten des Bremsdruck-Wiederaufbaus in Zeitraum $t_4$ bis $t_5$ zusätzlich die Höhe der jeweiligen Radbeschleunigung +b, welche im Zeitraum zwischen $t_4$ und $t_5$ auftritt, zu benutzen. Hierzu dient die Formel:

$$PG_N = (K_5 + K_6 \cdot Pmax) \times \left(\frac{K_7 + b}{K_7 - K_8}\right)$$

worin $K_7$ etwa 0,6g und $K_8$ etwa 1,0 g betragt. Die Konstanten $K_5 + K_6$ wurden bereits oben beziffert.

Hierdurch kann bei großen Radverzögerungen nahe der physikalisch möglichen Fahrzeugverzögerung der Bremsdruck langsamer aufgebaut werden, und bei Verzögerungen größer als die mögliche Fahrzeugverzögerung der Bremsdruck schon langsam wieder abgebaut werden, bevor eine Blockierneigung erkannt wird, wodurch ein schneller Bremsdruckabbau erforderlich wäre. Diese Maßnahme bewirkt daher ein noch langeres Verbleiben des Bremsdrucks bis kurz unter dem Abregeldruck $P_{max}$, wodurch der Bremsweg weiter verkürzt wird.

Zweckmäßig ist auch, zur Bestimmung des flachen Gradienten $PG_N$ des Bremsdruck-Wiederaufbaus zusätzlich die jeweilige Höhe des Straßenreibwertes ($\mu$) zu benutzen. Der Straßenreibwert ($\mu$) kann abgeschätzt werden aus der Formel:

$$\mu = c\frac{P_{max}}{N}$$

wobei

c=      ein Bremsenkennwert, der angibt, wie hoch die Bremskraft am Radumgang bei einem vorgebenen Bremsdruck ist,

$P_{max}$ =      der Abregeldruck, und

N =      die Radlast ist.

Hierdurch kann der Bremsdruckverlauf nicht nur von der physikalisch maximal möglichen Fahrzeugverzögerung abhängig verandert werden, sondern auch von der aufgrund des gerade vorliegenden Reibwertes maximal möglichen Fahrzeugverzögerung. Das heißt, entspricht die Radverzögerung etwa dem gerade vorliegenden Reibwert und damit der gerade moglichen Fahrzeugverzögerung, wird der Bremsdruck nicht weiter erhöht. Ist die Radverzogerung größer als der gerade vorliegende Reibwert, wird der Bremsdruckgradient negativ, der Bremsdruck also gesenkt. Hiermit wird ein längeres Verbleiben des Bremsdruckes bis kurz unter den Abregeldruck $P_{max}$, besonders auch auf niedrigen Reibwerten wie bei Eis und Schnee, erreicht.

Anstelle einer Einfuhrung einer Sicherheitszeit (s) ist es auch möglich, dann auf einen steileren Gradienten umzuschalten, wenn wahrend des flachen Bremsdruck-Wiederaufbaus ein Bremsdruck erreicht wird, der um einen vorgegebenen Wert über dem letzten Abregeldruck $P_{max}$ im vorhergehenden Regelzyklus liegt. Diese Art der Bremsdruckerhöhung ist durch das Fehlen einer konstanten Sicherheitszeit (s) adaptiver und führt somit zu einem höherem Regelkomfort und verbesserte Bremsstabilität.

Es hat sich in Versuchen weiter herausgestellt, daß es vorteilhaft sein kann, den Bremsdruck-Wiederaufbau so zu steuern, daß im Zeitpunkt $t_4$ kein Knick im Bremsdruckverlauf entsteht, sondern die Phasen mit steilem Gradient und flachem Gradient ohne Knick ineinander übergehen. Dies führt ebenfalls zu einer komfortableren Regelung und besserer Reibwertausnutzung (gestrichelt dargestellt).

Wird nämlich ein konstanter steiler Gradient benutzt, kann es bei zu steilen Gradienten des Bremsdruckes noch vor Erreichen des Knickpunktes $P_K$ zu hohen Radverzogerungen kommen, die scheinbar auf eine Blockierneigung hindeuten und somit ABS veranlassen, den Bremsdruck schnell abzusenken. Diese nicht erforderliche Bremsdruckabsenkung führt zu verminderter Reibwertausnutzung und somit Bremswegverlängerung. Führt man nun einen kontinuierlichen, e-Funktions-ähnlichen Verlauf ein, kann bei Bremsdrükken noch weit unter dem Bremsdruck im Knickpunkt $P_K$ der Bremsdruck mit einem sehr steilen Gradienten erhöht werden. Hierdurch kann, wie man anhand des gestrichelt dargestellten Bremsdruckverlaufs in der Fig. 2 sieht, ein im Mittel während eines ABS-Regelzyklus höherer Bremsdruck eingesteuert werden, ohne daß es zu früh zu einer erneuten Blockierneigung kommt. Damit kann der Bremsweg wiederum verkürzt und der Regelkomfort erhöht werden.

Bei dem oben beschriebenen knickfreien Verlauf erfolgt der Bremsdruck-Wiederaufbau nach der Formel:

$$PG_H = PG_N + K_{10}(\frac{1\text{-}P_{soll}}{P_K})$$

wobei die Konstante $K_{10}$ einen Wert von 25 bis 100 bar/s hat.

Die angeführten Formeln zur Berechnung des Bremsdruck-Wiederanstiegs haben sich aufgrund von Fahrversuchen als besonders günstig herausgestellt. Die Berechnungen werden von den Mikrocomputern ausgeführt, die in der ABS-Elektronik (9) oder der EBS-Elektronik (2) enthalten sind.

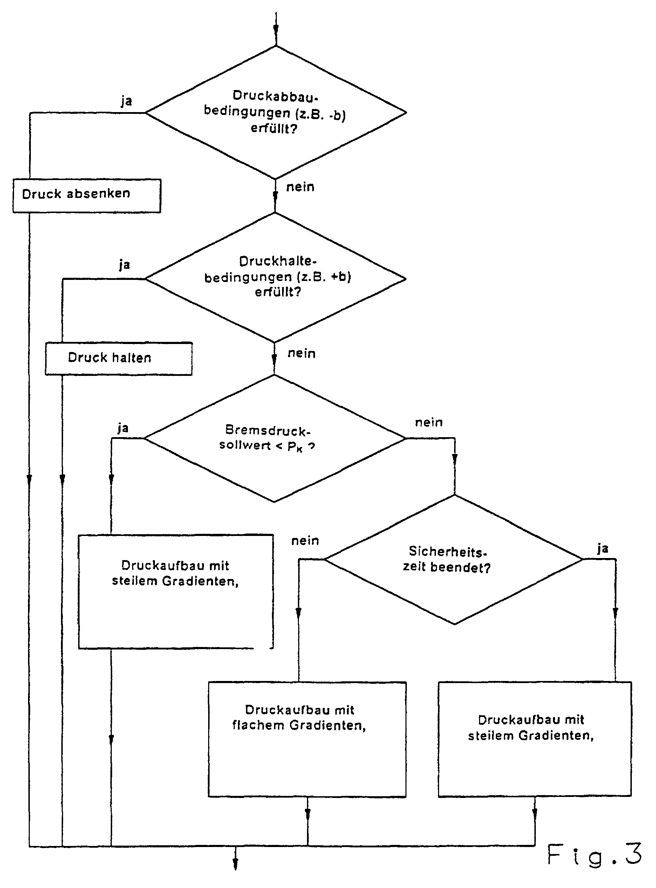

In der Fig. 3 ist beispielhaft ein Ablaufdiagramm dargestellt, wie es von den erwahnten Mikrocomputern während der Druckaufbauphase abgearbeitet wird. In einer ersten Entscheidung wird geprüft, ob Druckabbaubedingungen erfullt sind, also z. B. ein -b-signal vorliegt. Falls ja, wird der Druck abgesenkt. Falls nein, wird in einer zweiten Entscheidung geprüft, ob Druckhaltebedingungen erfüllt sind, also z. B. ein +b-Signal vorliegt. Falls ja, wird auf Druckhalten geschaltet. Falls nein, wird in einer dritten Entscheidung geprüft, ob der Bremsdruck-Sollwert, das ist der Bremsdruck, der zum jeweiligen Zeitpunkt im Regler (2) aufgrund der vom ABS (9) empfangenen Signale berechnet oder vom ABS (9) dem Regler vorgegeben wird, kleiner ist als der Druck im Knickpunkt $P_K$, welcher wie oben beschrieben berechnet wurde. Falls ja, erfolgt ein Druckaufbau mit steilem Gradienten.

Falls der Bremsdruck-Sollwert jedoch gleich oder größer als $P_K$ ist, wird in einer weiteren Entscheidung geprüft, ob bereits die Sicherheitszeit (s) abgelaufen ist. Falls dies nicht der Fall ist, wird der Druckaufbau mit flachem Gradienten weitergeführt, beispielsweise nach der Formel:

$$PG_N = 2\frac{bar}{s} + 0,5\frac{1}{s} \cdot P \, max$$

Falls jedoch die Sicherheitszeit (s), bereits abgelaufen ist, wird auf einen Druckaufbau mit steilem Gradienten umgeschaltet.

Durch die beschriebenen Maßnahmen läßt sich der Regelkomfort einer ABS-Bremsung erhöhen, und gleichzeitig der Bremsweg des Fahrzeugs verkürzen.

**Patentansprüche**

1. Verfahren zum Bremsdruck-Wiederaufbau in einem Kraftfahrzeug, das mit einem Antiblockiersystem ausgerüstet ist, wobei nach einer Bremsdruckabsenkung im Zeitraum $t_1$ bis $t_2$ von einem Abregeldruck ($P_{max}$) auf einen Haltedruck ($P_{min}$) und nach einer eventuellen Druckhaltephase im Zeitraum $t_2$ bis $t_3$ der Bremsdruck ($P_B$) zuerst mit steilem ($PG_H$) und anschließend mit flachem Gradienten ($PG_N$) wieder aufgebaut wird im Zeitraum $t_3$ bis $t_6$, wobei

   a) sowohl der Abregeldruck ($P_{max}$) als auch der Haltedruck ($P_{min}$) mittels eines Drucksensors (6) in jedem Regelzyklus erfaßt und elektronisch gespeichert wird,

   b) die Druckhöhe ($P_K$) am Ende $t_4$ des steilen Bremsdruck-Wiederaufbaus eine Funktion vom Abregeldruck ($P_{max}$) und Haltedruck ($P_{min}$) des letzten Regelzyklus oder eines Durchschnittswertes vom Abregeldruck ($P_{max}$) und Haltedruck ($P_{min}$) der letzten Regelzyklen ist,

   **dadurch gekennzeichnet, daß**

   c) der flache Gradient ($PG_N$) im Zeitraum $t_4$ bis $t_5$ des Bremsdruckwiederaufbaus eine Funktion vom Abregeldruck ($P_{max}$) des letzten Regelzyklus oder eines Durchschnittswertes vom Abregeldruck ($P_{max}$) der letzten Regelzyklen ist, und

   d) auch der Betrag des steilen Gradienten ($PG_H$) im Zeitraum $t_3$ bis $t_4$ eine Funktion vom Abregeldruck ($P_{max}$) und Haltedruck ($P_{min}$) des letzten Regelzyklus oder eines Durchschnittswertes vom Abregeldruck ($P_{max}$) und Haltedruck ($P_{min}$) der letzten Regelzyklen ist.

2. Verfahren nach Anspruch 1, **dadurch gekennzeichnet, daß** die Druckhöhe ($P_K$) am Ende des steilen Bremsdruck-Wiederaufbaus bestimmt wird nach der Formel:

$$P_K = P_{min} + K_1 (P_{max} - P_{min}),$$

wobei der Faktor $K_1$ zwischen 0,3 und 0,9 liegt.

3. Verfahren nach Anspruch 1 bis 2, **dadurch gekennzeich net, daß** der Gradient ($PG_H$) des steilen Bremsdruck-Wiederaufbaus, im Zeitraum $t_3$ bis $t_4$, bestimmt wird nach der Formel:

$$PG_H = K_3 + K_4 (P_K - P_{soll}),$$

wobei die Konstante $K_3$ zwischen 5 bar/s und 50 bar/s, der Faktor $K_4$ zwischen 3/s und 20/s liegt, und der Druck Psoll ein dem Regler (2) vom ABS (9) vorgegebe ner Bremsdruck-Sollwert ist.

4. Verfahren nach einem oder mehreren der Ansprüche 1 bis 3, **dadurch gekennzeichnet, daß** der Gradient ($PG_N$) des flachen Bremsdruck-Wiederaufbaus, im Zeitraum $t_4$ bis $t_5$ bestimmt wird nach der Formel:

$$PG_N = K_5 + K_6 \times P_{max},$$

wobei die Konstante $K_5$ zwischen 1 bar/s und 5 bar/s, und der Faktor $K_6$ zwischen 0,3/s und 0,9/s liegt.

5. Verfahren nach Anspruch 4, **dadurch gekennzeichnet, daß** zur Bestimmung des flachen Gradienten ($PG_N$) des Bremsdruck-Wiederaufbaus, im Zeitraum $t_4$ bis $t_5$, zusätzlich die Höhe der jeweiligen Radbeschleunigung ($\pm b$) benutzt wird.

6. Verfahren nach Anspruch 4 bis 5, **dadurch gekennzeichnet, daß** zur Berechnung des flachen Gradienten ($PG_N$) des Bremsdruck-Wiederaufbaus, im Zeitraum $t_4$ bis $t_5$ zusätzlich die Höhe des Straßenreibwertes ($\mu$) zwischen Reifen und Fahrbahn benutzt wird.

7. Verfahren nach einem oder mehreren der Ansprüche 4 bis 6, **dadurch gekennzeichnet, daß** nach Ablauf einer vorgegebenen Zeit (s) für den flachen Bremsdruck-Wiederaufbau wieder auf einen steileren Gradienten umgeschaltet wird ($t_5$).

8. Verfahren nach einem oder mehreren der Ansprüche 4 bis 6, **dadurch gekennzeichnet, daß** dann auf einen steileren Gradienten umgeschaltet wird, wenn während des flachen Bremsdruck-Wiederaufbaus ein Bremsdruck erreicht wird, der um einen vorgegebenen Wert über dem letzten Abregeldruck ($P_{max}$) liegt.

9. Verfahren nach einem oder mehreren der Ansprüche 1 bis 3, **dadurch gekennzeichnet, daß** der Gradient ($PG_N$) des flachen Bremsdruckwiederaufbaus bestimmt wird nach der Formel

$$PG_N = \left(K_5 + K_6 \times P_{max}\right) \times \left(\frac{K_7 + b}{K_7 - K_8}\right),$$

wobei der Term

$$\frac{K_7 + b}{K_7 - K_8} = 1,$$

gesetzt wird, wenn die Radbeschleunigung b größer ist als ein vorgegebener Wert $K_9$.

10. Verfahren nach Anspruch 9, **dadurch gekennzeichnet, daß** die Werte $K_7$, $K_8$ und $K_9$ in Abhängigkeit vom Kraftschlußbeiwert µ zwischen Reifen und Fahrbahn veränderbar sind.

11. Verfahren nach einem der Ansprüche 1 bis 9, **dadurch gekennzeichnet, daß** zur Erzielung eines knickfreien Bremsdruck-Wiederaufbaus der Gradient in der Zeit $t_3$ bis $t_5$ bestimmt wird nach der Formel:

$$PG_H = PG_N + K_{10} \times \left(\frac{1 - P_{soll}}{P_K}\right)$$

wobei der Faktor $K_{10}$ zwischen 25 bar/s und 100 bar/s liegt.

**Claims**

1. Method of building up brake pressure again in a motor vehicle fitted with an antilock braking system, in which method, after a decrease in brake pressure in the period $t_1$ to $t_2$ from a peak regulation pressure ($P_{max}$) to a sustained pressure ($P_{min}$) and after any pressure sustaining phase in the period $t_2$ to $t_3$, the brake pressure ($P_B$) is built up again initially with a steep gradient ($PG_H$) and then with a gentle gradient ($PG_N$) in the period $t_3$ to $t_6$, in which method

a) both the peak regulation pressure ($P_{max}$) and the sustained pressure ($P_{min}$) are detected by means of a pressure sensor (6) in each control cycle and stored electronically,

b) the pressure level ($P_K$) at the end $t_4$ of the steep brake pressure re-build-up is a function of the peak regulation pressure ($P_{max}$) and the sustained pressure ($P_{min}$) of the last control cycle or a function of an average value of the peak regulation pressure ($P_{max}$) and sustained pressure ($P_{min}$) of the last control cycles, **characterized in that**

c) the gentle gradient ($PG_N$) in the period $t_4$ to $t_5$ of the brake pressure re-build-up is a function of the peak regulation pressure ($P_{max}$) of the last control cycle or a function of an average value of the peak regulation pressure ($P_{max}$) of the last control cycles, and

d) also the amount of the steep gradient ($PG_H$) in the period $t_3$ to $t_4$ is a function of the peak regulation pressure ($P_{max}$) and sustained pressure ($P_{min}$) of the last control cycle or a function of an average value of the peak regulation pressure ($P_{max}$) and sustained pressure ($P_{min}$) of the last control cycles.

2. Method according to claim 1, **characterized in that** the pressure level ($P_K$) at the end of the steep brake pressure re-build-up is determined according to the formula:

$$P_K = P_{min} + K_1 (P_{max} - P_{min}),$$

wherein the factor $K_1$ is from 0.3 to 0.9.

3. Method according to claims 1 and 2, **characterized in that** the gradient ($PG_H$) of the steep brake pressure re-build-up, in the period $t_3$ to $t_4$, is determined according to the formula:

$$PG_H = K_3 + K_4 (P_K - P \text{ des }),$$

wherein the constant $K_3$ is from 5 bar/s to 50 bar/s, the factor $K_4$ is from 3/s to 20/s and the pressure Pdes is a brake pressure desired value that is preset for the regulator (2) by the ABS (9).

4. Method according to one or more of claims 1 to 3, **characterized in that** the gradient ($PG_N$) of the gentle brake pressure re-build-up, in the period $t_4$ to $t_5$, is determined according to the formula :

$$PG_N = K_5 + K_6 \times P_{max},$$

wherein the constant $K_5$ is from 1 bar/s to 5 bar/s, and the factor $K_6$ is from 0.3/s to 0.9/s.

5. Method according to claim 4, **characterized in that** in order to determine the gentle gradient ($PG_N$) of the brake pressure re-build-up, in the period $t_4$ to $t_5$, there is additionally used the degree of wheel acceleration (±b) in question.

6. Method according to claims 4 and 5, <u>**characterized in that**</u> in order to calculate the gentle gradient ($PG_N$) of the brake pressure re-build-up, in the period $t_4$ to $t_5$, there is additionally used the magnitude of the road friction value (µ) between the tyre and the road surface.

7. Method according to one or more of claims 4 to 6, <u>**characterized in that**</u> after a predetermined time (s) for the gentle brake pressure re-build-up has elapsed a change is again made to a steeper gradient ($t_5$).

8. Method according to one or more of claims 4 to 6, <u>**characterized in that**</u> a change to a steeper gradient is made when, during the gentle brake pressure re-build-up, a brake pressure is reached that is higher than the last peak regulation pressure ($P_{max}$) by a predetermined value.

9. Method according to one or more of claims 1 to 3, <u>**characterized in that**</u> the gradient ($PG_N$) of the gentle brake pressure re-build-up is determined according to the formula:

$$PG_N = (K_5 + K_6 \times P_{max}) \times \left( \frac{K_7 + b}{K_7 - K_8} \right)$$

wherein it is assumed that the term

$$\frac{K_7 + b}{K_7 - K_8} = 1,$$

when the wheel acceleration b is greater than a predetermined value $K_9$.

10. Method according to claim 9, <u>**characterized in that**</u> the values $K_7$, $K_8$ and $K_9$ can be altered in dependence on the adhesion coefficient µ between the tyre and the road surface.

11. Method according to any one of claims 1 to 9, <u>**characterized in that**</u>, in order to obtain a smooth brake pressure re-build-up, the gradient in the period $t_3$ to $t_5$ is determined according to the formula:

$$PG_H = PG_N + N_{10} \times \left( \frac{1 - P_{des}}{P_K} \right)$$

wherein the factor $K_{10}$ is from 25 bar/s to 100 bar/s.

**Revendications**

1. Procédé pour le rétablissement de la pression de freinage dans un véhicule automobile équipé d'un système d'anti-blocage, dans lequel, après une baisse de pression de freinage pendant la période $t_1$ à $t_2$, on passe d'une pression de régulation ($P_{max}$) à une pression de maintien ($P_{min}$) et après une phase de maintien de pression éventuelle pendant la période $t_2$ à $t_3$, on rétablit la pression de freinage ($P_B$) tout d'abord avec un gradient raide ($PG_H$) et ensuite avec un gradient plat ($PG_N$) pendant la période $t_3$ à $t_6$, dans lequel :

a) aussi bien la pression de régulation ($P_{max}$) que la pression de maintien ($P_{min}$) sont déterminées au moyen d'un capteur de pression (6) dans chaque cycle de régulation et mémorisée par voie électronique,
b) la hauteur de pression ($P_K$) à la fin de $t_4$ du rétablissement de pression de freinage raide est une fonction de la pression de régulation ($P_{max}$) et de la pression de maintien ($P_{min}$) du dernier cycle de régulation ou bien d'une valeur moyenne de la pression de régulation ($P_{max}$) et de la pression de maintien ($P_{min}$) des derniers cycles de régulation,
**caractérisé en ce que** :
c) le gradient plat ($PG_N$) dans la période de $t_4$ à $t_5$ du rétablissement de pression de freinage est une fonction de la pression de régulation ($P_{max}$) du dernier cycle de régulation ou d'une valeur moyenne de la pression de régulation ($P_{max}$) des derniers cycles de régulation, et
d) le montant du gradient raide ($PG_H$) dans la période de $t_3$ à $t_4$ est également est une fonction de la pression de régulation ($P_{max}$) et de la pression de maintien ($P_{min}$) du dernier cycle de régulation ou d'une valeur moyenne de la pression de régulation ($P_{max}$) et de la pression de maintien ($P_{min}$) des derniers cycles de régulation.

2. Procédé selon la revendication 1, **caractérisé en ce que** la hauteur de pression ($P_K$) à la fin du rétablissement de pression de freinage raide est déterminée suivant la formule :

$$P_K = P_{min} + K_1 (P_{max} - P_{min})$$

dans laquelle le facteur $K_1$ est compris entre 0,3 et 0,9.

3. Procédé selon les revendications 1 et 2, **caractérisé en ce que** le gradient ($PG_H$) du rétablissement de pression raide pendant la période de $t_3$ à $t_4$ est déterminée selon la formule :

$$PG_H = K_3 + K_4 (P_K - P_{soll})$$

dans laquelle la constante $K_3$ est comprise entre 5 bar/s et 50 bar/s, et le facteur $K_4$ est compris entre 3/s et 20/s, et la pression $P_{soll}$ est une valeur de consigne de la pression de freinage imposée au régulateur (2) par le système d'anti-blocage (9).

4. Procédé selon l'une ou plusieurs des revendications 1 à 3, **caractérisé en ce que** le gradient $(PG_N)$ du rétablissement de pression de freinage plat pendant la période de $t_4$ à $t_5$ est déterminé selon la formule :

$$PG_N = K_5 + K_6 \times P_{max}$$

dans laquelle la constante $K_5$ est comprise entre 1 bar/s et 5 bar/s, et le facteur $K_6$ est compris entre 0,3/s et 0,9/s.

5. Procédé selon la revendication 4, **caractérisé en ce que** pour déterminer le gradient plat $(PG_N)$ du rétablissement de pression de freinage pendant la période de $t_4$ à $t_5$, on utilise en supplément la hauteur de l'accélération de roue respective ($\pm$b).

6. Procédé selon les revendications 4 et 5, **caractérisé en ce que** pour calculer le gradient plat $(PG_N)$ du rétablissement de pression de freinage pendant la période de $t_4$ à $t_5$, on utilise en supplément la hauteur du coefficient de friction de route ($\mu$) entre les pneumatiques et la chaussée.

7. Procédé selon l'une ou plusieurs des revendications 4 à 6, **caractérisé en ce qu'**après écoulement d'un temps prédéterminé (s) pour le rétablissement de pression de freinage plat, on commute de nouveau à un gradient plus raide ($t_5$).

8. Procédé selon l'une ou plusieurs des revendications 4 à 6, **caractérisé en ce que** l'on commute à un gradient plus raide lorsque, pendant le rétablissement de pression de freinage plate, on atteint une pression de freinage qui est supérieure d'une valeur prédéterminée à la dernière pression de régulation $(P_{max})$.

9. Procédé selon l'une ou plusieurs des revendications 1 à 3, **caractérisé en ce que** le gradient $(PG_N)$ du rétablissement de pression de freinage plat est déterminé suivant la formule :

$$PG_N = (K_5 + K_6 \times P_{max}) \times \left(\frac{K7 + b}{K7 - K8}\right)$$

dans laquelle :

$$\frac{K7 + b}{K7 - K8} = 1$$

lorsque l'accélération de roue b est supérieure à une valeur prédéterminée $K_9$.

10. Procédé selon la revendication 9, **caractérisé en ce que** les valeurs $K_7$, $K_8$ et $K_9$ sont variables en fonction du coefficient de coopération de forces $\mu$ entre les pneumatiques et la chaussée.

11. Procédé selon l'une quelconque des revendications 1 à 9, **caractérisé en ce que** pour obtenir un rétablissement de pression de freinage sans inflexion, le gradient pendant la période de $t_3$ à $t_5$ est déterminé suivant la formule :

$$PG_H = PG_N + K_{10} \times \left(\frac{1 - Psoll}{PK}\right)$$

dans laquelle le facteur $K_{10}$ est compris entre 25 bar/s et 100 bar/s.

Fig.1

Fig.2

Druckabbaubedingungen (z.B. -b)
erfüllt?

ja

nein

Druck absenken

Druckhaltebedingungen (z.B. +b)
erfüllt?

ja

nein

Druck halten

Bremsdruck-
sollwert < $P_K$ ?

ja

nein

Druckaufbau mit
steilem Gradienten,

Sicherheitszeit beendet?

nein

ja

Druckaufbau mit
flachem Gradienten,

Druckaufbau mit
steilem Gradienten,

Fig.3